Europäisches Patentamt

European Patent Office

Office européen des brevets

(19)

(11) Publication number: **0 163 728**
**B1**

# EUROPEAN PATENT SPECIFICATION

(12)

(45) Date of publication of patent specification: **12.07.89**

(51) Int. Cl.⁴: **G 01 N 27/40, G 01 N 27/46**

(21) Application number: **85900346.9**

(22) Date of filing: **28.11.84**

(86) International application number:
**PCT/US84/01954**

(87) International publication number:
**WO 85/02465 06.06.85 Gazette 85/13**

(54) **ELECTROCHEMICAL SENSING OF CARBON MONOXIDE.**

(30) Priority: **01.12.83 US 557072**

(43) Date of publication of application:
**11.12.85 Bulletin 85/50**

(45) Publication of the grant of the patent:
**12.07.89 Bulletin 89/28**

(84) Designated Contracting States:
**DE FR GB NL SE**

(56) References cited:
**US-A-3 260 656**
**US-A-3 833 495**
**US-A-4 049 503**
**US-A-4 141 800**
**US-A-4 149 948**
**US-A-4 169 779**
**US-A-4 197 176**
**US-A-4 394 239**

(73) Proprietor: **HONEYWELL INC.**
**Honeywell Plaza**
**Minneapolis Minnesota 55408 (US)**

(72) Inventor: **VENKATASETTY, Hanumanthaiya, V.**
**12110 Red Oak Court South**
**Burnsville, MN 55337 (US)**

(74) Representative: **Rentzsch, Heinz et al**
**Honeywell Europe S.A. Holding KG Patent- und**
**Lizenzabteilung Postfach 184**
**D-6050 Offenbach am Main (DE)**

Courier Press, Leamington Spa, England.

# EP 0 163 728 B1

**Description**

The present invention is primarily directed to the detection of carbon monoxide (CO). An electrochemical sensor according to the precharacterizing portion of claim 1 is described in US—A—41 69 779 and serves for the detection of hydrogen sulfide $H_2S$. In this $H_2S$ sensor the working electrode consists of a gas diffusion membrane having a gold catalytic member positioned thereon which is prepared by mixing gold powder with a tetrafluorethylene dispersion and painting the mixture onto porous fluoro-carbon acting as the membran material. The counter electrode comprises a gas diffusion membrane having a second catalytic member consisting of gold or platinum black positioned thereon. In the preferred embodiment the counter and reference electrodes are Teflon bonded platinum black electrodes. A fixed DC-potential is applied across the working and counter electrodes.

The present invention provides an extremely sensitive method and sensor for detecting carbon monoxide CO and for this purpose provides the features as characterized in the independent claims. In particular the invention uses a gelled electrolyte containing an amount of polyethylene oxide. An electrolyte solution of approximately 1.0M lithium perchlorate ($LiClO_4$) in γ-butyrolactone or approximately 0.75M $LiClO_4$ in propylene carbonate when gelled with polyethylene oxide has been found to be especially suited to the detection of CO by oxidation at the platinum electrode.

Gelled electrolytes as such are known. US—A—38 33 495 describes a reference electrode halfcell in which the liquid junction can be renewed readily. The salt bridge of this cell comprises an elongated flexible insulated tube, gelled potassium chloride and potassium nitrate salt solutions filling the tube. The chloride solution is in contact with one end of the tube and the nitrate solution is in contact with the chloride solution and with the other end of the tube. Instead of potassium nitrate lithium trichloroacetate may be used. A variety of gelling agents is described with carbopol polyacrylic acid being preferred. Among a list of further gelling agents polyethylene oxide is mentioned. The reference electrode is contained in an aqueous electrolyte system.

US—A—40 49 503 describes an electrochemical gas detector comprising two electrodes and an organic electrolyte between them with the electrolyte being adapted for changing the electrochemical equilibrium at one of the electrodes where the electrolyte consists essentially of an anhydrous organic gel preferably based on an anhydrous organic solvent and a synthetic polymer.

Another electrochemical cell with a gelled electrolyte is described in US—A—41 49 948. This cell is used for detecting hydrogen sulphide and uses a working electrode and a reference electrode consisting of silver/silver sulphide. The electrolyte comprises two gel-like films one of which is adjacent an auxiliary electrode and the other of which has the reference and work electrodes therein. The electrolyte is composed of 10 to 20% by weight of polyvinyl chloride, 20 to 30% by weight of propylene carbonate, from 50 to 60% by weight of diethyl phthalate and about 1% by weight of potassium hexafluorophosphate. The film adjacent the auxiliary electrode contains from 2 to 10% by weight of lead dioxide or said depolarizer.

Finally US—A—41 41 800 shows an electrochemical gas detector for the detection of gas traces including hydrogen sulphide $H_2S$, sulphur dioxide $SO_2$, nitrogen dioxide $NO_2$, phosgene $CoCl_2$ and chlorine $Cl_2$. The detector includes an electrolytic measurement cell with a normally solid organic electrolyte, in which the gas component to be detected from the gas chamber diffuses to a three phase boundary (electrolyte-electrode-gas chamber) and there brings about a change in the electrochemical equilibrium. As a result there is created in an outer closing circuit an electrical current, the level of which is a value for the gas trace concentration. The electrodes comprise silver and the gel electrolyte comprises the polymer polymethylmethacrylate, the solvent comprises propylene carbonate, the electrolyte comprises as additives sodium benzoate and benzoic acid and is doped with iron (III) sulphate.

## Background of the invention

Electrochemical reactions based on oxidation or reduction (redox) of metals and compounds at an electrode are highly selective because of the characteristic redox potential at which oxidation or reduction of the electroactive species occurs. With electrochemical sensing, selection of the electrode material and electrolyte solution has been very important in determining sensitivity and selectivity. A detailed description of the theoretical considerations is contained in the above cross-reference application and is incorporated by reference in this application to the extent required.

One limitation of the prior art is that the presence of hydrogen ions, either in the solvent or in the additive (electrolyte), will interfere with the oxidation and reduction of chemical agents sought to be detected. This has lead to the necessity for developing aprotic (free of replaceable hydrogen ions) electrolyte systems.

## Summary of the invention

By means of the present invention, an electrochemical detection system has been developed which is extremely sensitive to the presence of CO and can also be used to detect other toxic gases such as nitrogen oxides ($N_2O_4$, $NO_x$) $SO_2$, $H_2S$ and the like.

The system includes a nonaqueous, aprotic electrolyte system of approximately 1.0M $LiClO_4$ in γ-butyrolactone or approximately 0.75M $LiClO_4$ in propylene carbonate gelled with a small amount of polyethylene oxide (about 1% by weight based on the other constituents). A platinum electrode is used on

2

the oxidation site for the gas detection. The polymer containing electrolyte solutions have high electrolytic conductivity, low vapor pressure, high solubility for carbon monoxide and high chemical and electrochemical stability. The electrolyte solution and electrodes can be packaged into a low-cost electrochemical cell for detecting carbon monoxide or other gases using a semipermeable membrane coated on one side with platinum metal film as the sensing electrode. The polymer based electrolyte solution can be easily contained in the cell assuring long shelf life.

Brief description of the drawings

Figures 1 and 1a are schematic diagrams of an electrochemical cell for demonstrating the invention.

Figure 2 is a graphical presentation of specific conductance vs. concentration (25°C) of several electrolytes in nonaqueous solvents.

Figure 3 is a graphical presentation of potential ranges available in nonaqueous vs. aqueous electrolyte solutions.

Figures 4 and 5 show graphical plots of the sensor response to CO.

Description of the preferred embodiment

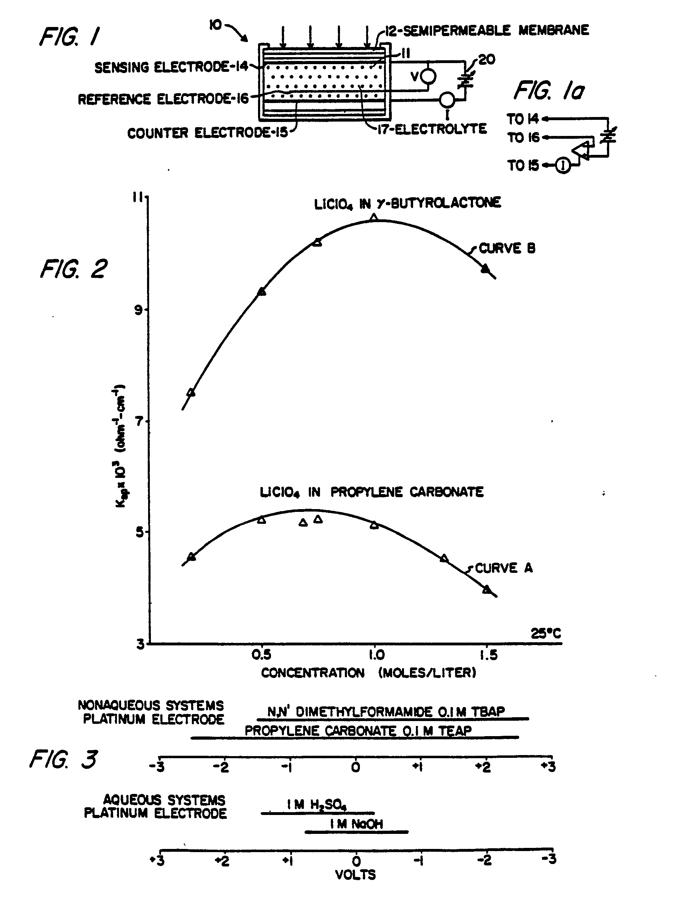

Figure 1 generally illustrates an electrochemical cell 10 consisting of a chamber 11 having a semipermeable membrane 12 across an opening. The chamber 11 contains a film of platinum working or sensing electrode 14, a counter electrode 15 of platinum film and a Ag/Ag+ reference electrode 16. An adjustable potential source 20 is connected across the sensing and counter electrode and the current is measured. A voltage exists but no current flows from the reference electrode to the sensing electrode. A preferred form of this energizing circuit may include an operational amplifier as shown in Figure 1a wherein no current flows in the feedback loop from the reference electrode to the negative input of the operational amplifier. The three electrodes are internally separated by a material which also acts as a wicking material for the electrolyte.

A gelled nonaqueous electrolyte solution 17 permeates and fills the chamber. This solution utilizes an aprotic organic solvent such as propylene carbonate or γ-butyrolactone and an active electrolyte such as $LiClO_4$ which has a wide potential window so that gases sought to be detected can be oxidized or reduced without decomposing the electrolyte solution.

As previously stated, the electrolyte solvent should be aprotic (no replaceable hydrogen atoms) and it should have a high boiling point low, low freezing point to prvide a wide operating temperature range between boiling point and freezing point, and low vapor pressure so that it is stable. The solvent should have a fairly high dielectric constant and low viscosity and so that solutes are easily soluble, giving solutions with fairly high conductivity. The solvent and electrolyte solutions from such solvents should be electrochemically stable to oxidation and reduction, giving a wide voltage window to carry out electrochemical redox reactions at an electrode surface. The solvent should be low cost, should be easily purified, and should be nontoxic. The following solvents have been chosen for the electrolyte system of the invention.

| Properties | Propylene carbonate | γ-Butyrolactone |
|---|---|---|
| Boiling point (°C) | 241 | 202 |
| Freezing point (°C) | −49 | −43 |
| Dielectric constant | 64.4 (25°C) | 39 (20°C) |
| Viscosity mP (25°C) | 25.3 | 17.5 |
| Density (25°C) g/ml | 1.19 | 1.13 |

The conductivity concentration studies carried out using lithium perchlorate solute as the supporting electrolyte in propylene carbonate show a maximum conductivity at about 0.75M (Figure 2, curve A) whereas similar studies in the preferred γ-butyrolactone show a much higher maximum conductivity at about 1M (Figure 2, curve B). As seen from the above, solvents such as propylene carbonate or γ-butyrolactone have a high boiling point, low melting point, and very low vapor pressure. They are also non-corrosive so that the electrochemical cell can operate over a wide tempreature range for an extended period. Gases such as CO are highly soluble in these nonaqueous organic solvents making for high sensitivity of detection.

With the wide range of potential window available for oxidation and reduction, many gases can be oxidized or reduced in the same cell so that the electrochemical cell can be used for different gases of interest.

The electrochemical method for the quantitative determination of materials is based on the principle of limiting current density measured at the electrode surface. Limiting current density is defined as the current density resulting from the oxidation or reduction of every molecule of the electroactive material or chemical agent reaching the electrode surface. A linear relationship between the limiting current density ($i_L$) and the bulk concentration ($C_b$) of the electroactive material or chemical agent can be obtained using Fick's law of diffusion

$$i_L = \frac{nFD\ C_b}{d}$$

where D is the diffusion coefficient of the electroactive molecules in the electrolyte, n is the number of electrons involved, F is the Faraday constant, and d is the diffusion layer thickness. Thus, the limiting current density provides the quantitative measure of the concentration, while the characteristic redox potential identifies the molecules.

Figure 3 shows graphically a sample comparison of potential ranges available in nonaqueous vs. aqueous electrolyte solutions. Aqueous electrolytes are limited to a voltage range of about 1.5 volts of redox potential as shown in the figure. The presence of protons in aqueous based electrolytes interferes with redox processes of organic molecules, even within this range. Aprotic electrolytes (nonaqueous) contain no protons and can achieve three times the voltage range of aqueous electrolytes, or about 4.5 volts as shown. Nonaqueous organic electrolytes are preferable for the analysis of CO and organic compounds such as chemical agents which are more soluble in organic electrolyte solutions compared to aqueous electrolyte solutions.

Electrochemical experiments have been conducted to demonstrate the feasibility of nonaqueous electrochemical redox techniques for the detection and identification of simulants for chemical agents. Concentrated solutions of supporting electrolytes such as 0.5M lithium perchlorate ($LiClO_4$) and 0.1M tetraethylammonium perchlorate (TEAP) in propylene carbonate (PC) or γ-butyrolactone were prepared and used in a conventional electrochemical setup. The sensing and counter electrodes were platinum and the reference electrode was Ag/Ag+. The preferred solvent was γ-butyrolactone. The preferred electrolyte/solvent system is 1M $LiClO_4$ in γ-butyrolactone. The electrochemical instrumentation consisted of a Princeton Applied Research Model 173 potentiostat/galvanostat with a Model 175 Universal Programmer, Model 179 digital Coulometer, and Hewlett-Packard Model 7040A x-y recorder.

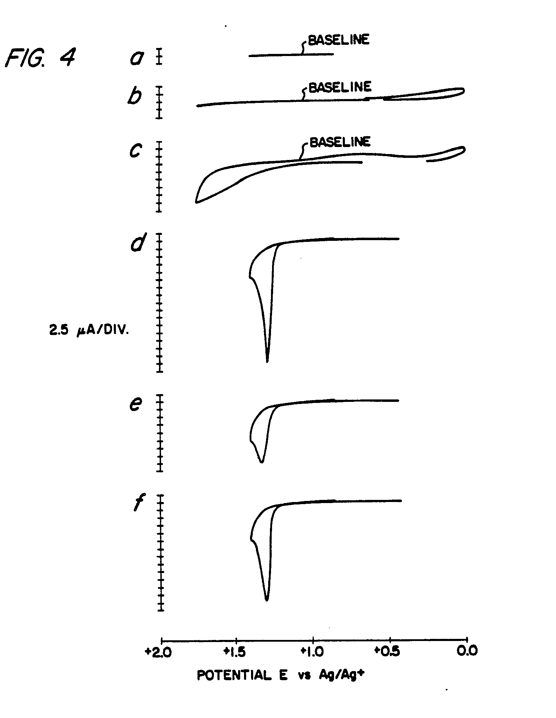

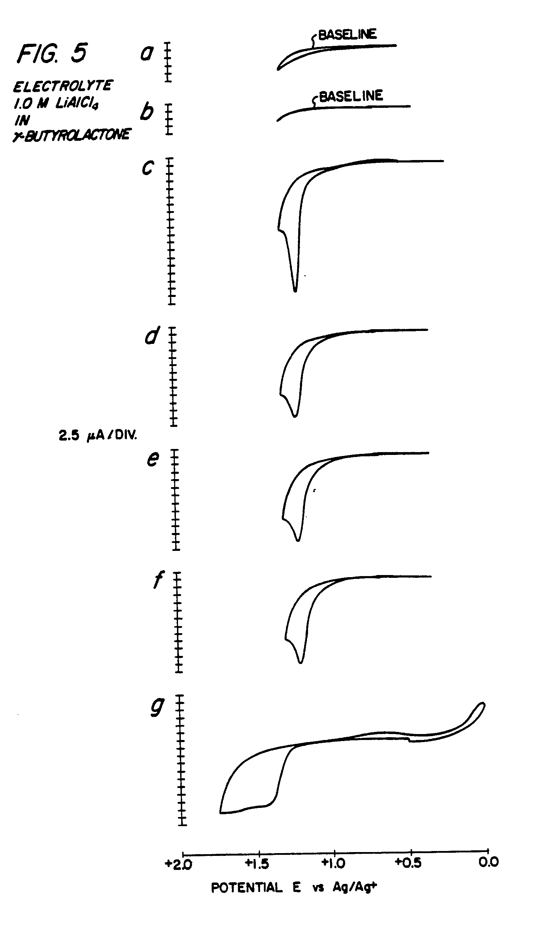

The gelled nonaqueous electrolyte solution is prepared by dissolving 1% (by wt.) of the polymer, polyethylene oxide (Molecular weight approximately 100,000) in 1.0M $LiClO_4$ in γ-butyrolactone or 0.75M $LiClO_4$ in propylene carbonate. The solution in γ-butyrolactone has specific conductivity of $9.89 \times 10^{-3}$ohm$^{-1}$cm$^{-1}$ whereas the solution in propylene carbonate has specific conductivity of $5.389 \times 10^{-3}$ohm$^{-1}$cm$^{-1}$ at 25°C. These solutions can be used as media for the dissolution of carbon monoxide gas and the carbon monoxide gas can be oxidized at the platinum electrode surface at a known potential. In the case of propylene carbonate solution, carbon monoxide can be oxidized at +1.25 to +1.30V vsAg/Ag+ whereas in γ-butyrolactone solution, carbon monoxide can be oxidized at +1.20V vsAg/Ag+. This is illustrated in Figures 4 and 5, respectively. The oxidation shown beyond 1.3V (curve f of Figure 4) and 1.2V (curve g of Figure 5) are due to oxidation of other components at higher potentials. The very sharp, distinct change in current is very accurate and repeatable. The current generated at these oxidation potential(s) is proportional to the concentration of carbon monoxide in the electrolyte solution. These electrolyte solutions are stable to electrochemical oxidation and reduction within the potential range of interest to carbon monoxide detection.

The gelled electrolyte solutions do not flow through semipermeable membranes like PTFE (polytetrafluoroethylene) that are used in low cost carbon monoxide sensors and, therefore, the cells can be made to last longer. The polymer containing electrolyte solutions can be packaged easily for sensing CO.

While the invention has been particularly described with reference to CO, other gases such as oxide of nitrogen ($N_2O_4$, $NO_x$) and gases such as $SO_2$ and $H_2S$ should produce distinct results also. The three electrode configuration cell structure shown in Figure 1 is set up with a small amount of the electrolyte solution (~1 ml) with arrangement to apply a known potential and measuring the current generated. The carbon monoxide gas is allowed to enter the cell through the semipermeamble membrane and establish equilibrium state. By applying a potential slightly higher than the oxidation value, the electroactive species, namely CO around the sensing anode is completely oxidized and the current-concentration relationship can be established according to the relationship.

## Claims

1. An electrochemical sensor for gas detection comprising:

a) an electrochemical cell (10) having therein a plurality of noble metal electrodes including a working electrode (14), a counter electrode (15) and a reference electrode (16);

b) a nonaqueous electrolyte solution (17) in said cell, said solution comprising an aprotic organic solvent selected from the group consisting of γ-butyrolactone and propylene carbonate the solution also containing an amount of lithium perchlorate electrolyte;

4

c) a source (20) of electrical DC-potential to energize said electrochemical cell at desired potentials, connected across said working and counter electrodes;

d) current measuring means (I) connected across said working (14) and counter (15) electrodes; characterized in that

e) the working electrode (14) and the counter electrode (15) consist of a film of platinum;

f) the reference electrode consists of Ag/Ag+; and

g) the electrolyte solution is gelled with an amount of polyethylene oxide as gelling agent, said amount being about 1% by weight based on the weight of the solution.

2. The sensor according to claim 1 wherein the nonaqueous electrolyte solvent is γ-butyrolactone, characterized in that said lithium perchlorate (LiClO$_4$) electrolyte has a concentration of about 1.0M based on the solvent.

3. The sensor according to claim 1 wherein the nonaqueous electrolyte solvent is propylene carbonate, characterized in that said (LiClO$_4$) electrolyte has a concentration of about 0.75M.

4. A sensor according to one of the preceding claims, characterized in that the source (20) of electrical DC-voltage is adjustable.

5. A method for detecting the presence of toxic agents comprising the steps of:

a) providing electrochemical cell (10) having a platinum working electrode (14), a platinum counter electrode (15) and an Ag/Ag+ reference electrode (16);

b) providing a nonaqueous gelled electrolyte solution in the electrochemical cell, said solution comprising an aprotic organic solvent selected from the group consisting of γ-butyrolactone and propylene carbonate, the solution also containing an amount of lithium perchlorate electrolyte and a polyethylene oxide gelling agent of about 1% by weight based on the weight of the solution;

c) exposing the electrochemical cell to an atmosphere suspected of containing the gas sought to be detected;

d) connecting an adjustable electrical DC-voltage (20) to said working and counter electrodes to energize said cell and measuring the cell current (I).

## Patentansprüche

1. Elektrochemischer Sensor zum Gasnachweis mit

a) einer elektrochemischen Zelle (10), welche mehrere Edelmetallelektroden einschließlich einer Arbeitselektrode (14), einer Gegenelektrode (15) sowie einer Bezugselektrode (16) aufweist;

b) einer wasserfreien Elektrolytlösung (17) in der Zelle, wobei diese Lösung ein aprotisches organisches Lösungsmittel aus der Gruppe bestehend aus γ-Butyrolactone und Propylencarbonat enthält und die Lösung ferner als Bestandteil einen Lithiumperchloratelektrolyten enthält;

c) einer in die Arbeits- und die Gegenelektrode angeschlossenen Quelle (20) elektrischen Gleichstrompotentials für die Stromversorgung der elektrochemischen Zelle mit gewünschten Potentialen;

d) einer an die Arbeitselektrode (14) und die Gegenelektrode (15) angeschlossenen Strommeß-vorrichtung (I); dadurch gekennzeichnet, daß

e) die Arbeitselektrode (14) und die Gegenelektrode (15) aus einem Platinfilm bestehen;

f) die Bezugselektrode aus Ag/Ag+ besteht; und

g) die Elektrolytlösung mit einem Bestandteil von Polyethylenoxyd als Gelbildner geliert ist, wobei der Bestandteil ewta ein Gewichtsprozent bezogen auf das Gewicht der Lösung beträgt.

2. Sensor nach Anspruch 1, bei dem das wasserfreie Elektrolytlösungsmittel γ-Butyrolacton ist, dadurch gekennzeichnet, daß der Lithiumperchlorat (LiClO$_4$)-elektrolyt eine Konzentration von etwa 1,0 Mol bezogen auf das Lösungsmittel hat.

3. Sensor nach Anspruch 1, bei dem das wasserfreie Elektrolytlösungsmittel Propylencarbonat ist, dadurch gekennzeichnet, daß das Lithiumperchlorat (LiClO$_4$) eine Konzentration von etwa 0,75 Mol hat.

4. Sensor nach einem der vorangehenden Ansprüche, dadurch gekennzeichnet, daß die elektrische Gleichstromquelle einstellbar ist.

5. Verfahren zum Nachweis der Anwesenheit giftiger Stoffe mit folgenden Schritten:

a) Verwendet wird eine elektrochemische Zelle (10) mit einer Platin-Arbeitselektrode (10), einer Platin-Gegenelektrode (15) sowie einer Ag/Ag+ Bezugselektrode (16);

b) in der Zelle befindet sich eine wasserfrei gelierte Elektrolytlösung, welche ein aprotisches organisches Lösungsmittel aus der Gruppe von γ-Butyrolacton und Propylencarbonat enthält und wobei die Lösung ferner als Bestandteil eine Lithiumperchloratelektrolyten aufweist und als Gelbildner Polyethylenoxyd in einer Menge von etwa einem Gewichtsprozenten bezogen auf das Gewicht der Lösung vorhanden ist;

c) die elektrochemische Zelle wird einer Atmosphäre ausgesetzt, von welcher angenommen wird, daß sie das gesuchte Gas enthält;

d) eine einstellbare elektrische Gleichspannung (20) wird an die Arbeits- und die Gegenelektrode zur Stromversorgung der Zelle gelegt und der Zellenstrom (I) wird gemessen.

# EP 0 163 728 B1

**Revendications**

1. Un détecteur électrochimique pour la détection de gaz comprenant:
a) une cellule électrochimique (10) comportant une pluralité d'électrodes en métau noble comprenant une électrode opératoire (14), une contre-électrode (15) et une électrode de référence (16);
b) une solution électrolytique non aqueuse (17) dans ladite cellule, ladite solution comprenant un solvant organique aprotique choisi dans le groupe constitué par la γ-butyrolactone et le carbonate de propylène, la solution contenant également une quantité d'électrolyte à base de perchlorate de lithium;
c) une source (20) de potentiel électrique en courant continu pour mettre sous tension ladite cellule électrochimique aux potentiels désirés, connectée entre l'électrode opératoire et la contre-électrode;
d) un dispositif de mesure de courant (I) connecté entre ladite électrode opératoire (14) et la contre-électrode (15); caractérisé en ce que
e) l'électrode opératoire (14) et la contre-électrode (15) sont constituées d'une pellicule de platine;
f) l'électrode de référence est constituée de Ag/Ag+; et
g) la solution électrolytique est gélifiée au moyen d'une quantité d'oxyde de polyéthylène comme agent gélifiant, cette quantité étant environ 1% en poids basé sur le poids de la solution.

2. Le détecteur selon la revendication 1, dans lequel le solvant électrolytique non aqueux est la γ-butyrolactone, caractérisé en ce que ledit électrolyte à base de perchlorate de lithium ($LiClO_4$) présente une concentration d'environ 1,0 M basée sur le solvant.

3. Le détecteur selon la revendication 1, dans lequel le solvant électrolytique non aqueux est du carbonate de propylène, caractérisé en ce que ledit électrolyte ($LiClO_4$) présente une concentration d'environ 0,75 M.

4. Un détecteur selon l'une des revendications précédentes, caractérisé en ce que la source (20) de tension électrique continue est réglable.

5. Une méthode pour détecter la présence d'agents toxiques, comprenant les étapes de:
a) réaliser une cellule électrochimique (10) présentant une électrode opératoire (14), une contre-électrode en platine (15) et une électrode de référence Ag/Ag+ (16);
b) réaliser une solution électrolytique gélifiée non aqueuse dans la cellule électrochimique, cette solution comportant un solvant organique aprotique choisi dans le groupe constitué par la γ-butyrolactone et le carbonate de propylène, la solution renfermant également une quantité d'électrolyte à base de perchlorate de lithium et un agent gélifiant à base d'oxyde de polyéthylène d'environ 1% en poids basé sur le poids de la solution;
c) exposer la cellule électrochimique à une atmosphère suspectée de renfermer le gaz que l'on cherche à détecter;
d) connecter une tension réglable en courant électrique continu (20) entre l'électrode opératoire et la contre-électrode afin de mettre ladite cellule sous tension et mesurer le courant de cellule (I).

FIG. 1

10

12-SEMIPERMEABLE MEMBRANE

11

SENSING ELECTRODE-14

V

20

REFERENCE ELECTRODE-16

FIG. 1a

COUNTER ELECTRODE-15

17-ELECTROLYTE

TO 14

TO 16

TO 15

FIG. 2

LICIO$_4$ IN $\gamma$-BUTYROLACTONE

CURVE B

$K_{sp} \times 10^3$ (ohm$^{-1}$-cm$^{-1}$)

LICIO$_4$ IN PROPYLENE CARBONATE

CURVE A

25°C

0.5          1.0          1.5

CONCENTRATION (MOLES/LITER)

NONAQUEOUS SYSTEMS
PLATINUM ELECTRODE

N,N' DIMETHYLFORMAMIDE 0.1 M TBAP

PROPYLENE CARBONATE 0.1 M TEAP

FIG. 3

-3      -2      -1       0      +1      +2      +3

AQUEOUS SYSTEMS
PLATINUM ELECTRODE

1 M H$_2$SO$_4$

1 M NaOH

+3      +2      +1       0      -1      -2      -3

VOLTS

1

FIG. 4

*a*   BASELINE

*b*   BASELINE

*c*   BASELINE

*d*

2.5 μA/DIV.

*e*

*f*

+2.0   +1.5   +1.0   +0.5   0.0

POTENTIAL E vs Ag/Ag⁺

FIG. 5

ELECTROLYTE
1.0 M LiAlCl₄
IN
γ-BUTYROLACTONE

2.5 μA/DIV.

a    BASELINE
b    BASELINE
c
d
e
f
g

+2.0    +1.5    +1.0    +0.5    0.0

POTENTIAL E vs Ag/Ag⁺